# EUROPÄISCHE PATENTSCHRIFT

(11) **EP 3 452 733 B1**
(45) Veröffentlichungstag und Bekanntmachung des Hinweises auf die Patenterteilung: **01.03.2023**
(21) Anmeldenummer: 17711622.5
(22) Anmeldetag: 15.03.2017
(51) Int. Cl.: F16B 21/07, F16B 21/06

(54) **VERLÄNGERUNGSADAPTER EINER STECKKUPPLUNG SOWIE DAZUGEHÖRIGES HERSTELLUNGS- UND MONTAGEVERFAHREN**
EXTENSION ADAPTER OF A PLUG-IN COUPLING AND ASSOCIATED PRODUCTION AND INSTALLATION METHOD
ADAPTATEUR PROLONGATEUR D'UN ACCOUPLEMENT À EMBOÎTEMENT ET PROCÉDÉS DE FABRICATION ET MONTAGE ASSOCIÉS

(30) Priorität: 09.05.2016 DE 202016102474 U
(43) Veröffentlichungstag der Anmeldung: 13.03.2019
(73) Patentinhaber: Böllhoff Verbindungstechnik GmbH, 33649 Bielefeld (DE)
(72) Erfinder: FRITZSCH, Jasmin, 33824 Werther (DE); HEINRICHS, Heinrich, 32602 Vlotho (DE); KAHRE, Michael, 32052 Herford (DE)
(74) Vertreter: HWP Intellectual Property
(86) Internationale Anmeldenummer: PCT/EP2017/056081
(87) Internationale Veröffentlichungsnummer: WO 2017/194226

(56) Entgegenhaltungen:
- CN-Y- 200 952 621
- DE-A1- 3 232 926
- DE-A1- 19 831 897
- DE-U1-202004 006 969
- DE-U1-202009 007 483
- US-A1- 2002 163 180
- US-A1- 2011 303 053

## Beschreibung

### 1. Gebiet der Erfindung

Die vorliegende Erfindung betrifft einen Verlängerungsadapter einer Steckkupplung, mit dem ein Freiraum zwischen einem männlichen Kupplungselement und einem weiblichen Kupplungselement verbindend überbrückbar ist. Des Weiteren betrifft vorliegende Erfindung eine Verbindung zwischen zwei Bauteilen mithilfe einer Steckkupplung und des Verlängerungsadapters. Des Weiteren umfasst vorliegende Erfindung ein Herstellungsverfahren und ein Montageverfahren für den Verlängerungsadapter.

### 2. Hintergrund der Erfindung

Im Stand der Technik sind verschiedene Arten und Konstruktionen von Steckkupplungen bekannt, mit denen ein erstes und ein zweites Bauteil verbunden werden können.

So offenbart beispielsweise US 8,403,356 eine Steckkupplung zur Befestigung einer inneren Verkleidungsstruktur im Kraftfahrzeug, die aus mindestens drei Teilen besteht. Ein zwischengeordnetes Teil wird beispielsweise zur Realisierung des Abstands zwischen den beiden miteinander zu verbindenden Bauteilen genutzt. Des Weiteren wird ein männliches Kupplungselement eingesetzt, das ähnlich einem Nagel einen großflächigen Kopf aufweist. Dieses männliche Kupplungselement ist allein nicht in der Lage, sich in einer Bauteilöffnung zu halten. Erst die Kombination mit einem aufgesteckten und darauf verrasteten weiblichen Kupplungselement stellt den Halt in einer Bauteilöffnung und die Möglichkeit der Verbindung mit einem weiteren Bauteil sicher. Entsprechend ist eine Vorinstallation der einzelnen Kupplungselemente in den jeweiligen Bauteilen nicht möglich, vielmehr muss gemeinsam mit der Installation der Kupplungselemente an dem jeweiligen Bauteil auch das Zusammensetzen der Kupplungselemente und Bauteile erfolgen.

Des Weiteren beschreibt DE 197 21 314 A1 eine zwei- oder mehrteilige Steckkupplung, die beispielsweise auch einen Bolzen mit Kugelkopf, also ein männliches Kupplungselement in Kombination mit einer Kugelpfanne in einem weiblichen Kupplungselement verwendet. Das weibliche Kupplungselement umfasst als Kopf ein paar scheibenförmige Elemente, die einander gegenüberliegend zwischen sich einen Spalt bilden. Dieser Spalt dient der Aufnahme bzw. dem Einsetzen der Kupplung in einem Randschlitz eines Bauteils. Somit werden die Ränder des Randschlitzes schienenähnlich in den beiden scheibenförmigen Elementen geführt. Daraus folgt eine Positionsvorgabe der Kupplung im Randbereich eines Bauteils. Eine Installation dieser Kupplung in einer beliebig platzierten Bauteilöffnung ist daher nicht möglich. Das gegenüberliegende männliche Kupplungsteil wird beispielsweise in einer Bauteilöffnung verrastet, oder in dieser eingeklebt, um dann die Steckkupplung zu verbinden.

Eine ähnliche Befestigung eines weiblichen Kupplungselements zeigt FR 2 932 235. Hier wird ebenfalls eine elastisch ausgebildete Kugelpfanne bereitgestellt, die eine ringförmige Befestigungsnut zur Befestigung beispielsweise an einem Bildschirm aufweist. Diese Befestigungsnut lässt sich in seitliche Schlitze des Bauteils einschieben, wobei nach Installation des weiblichen Kupplungselements das Kupplungselement weit über die Bauteilebene hinaus ragt. Da die Kugelpfanne über die Bauteiloberfläche hinaus ragt, kann sich die Kugelpfanne mit dem darin installierten Kugelkopf verformen und Schwingungen dämpfen. Diese Schwingungsdämpfung wird gleichzeitig durch zusätzliche Aussparungen parallel zum Hohlraum gewährleistet, indem das männliche Kupplungselement eingesetzt ist.

Eine zwar nur entfernte aber dennoch simple Konstruktion einer Steckkupplung offenbart GB 1 332 397 auf dem Gebiet der Druckknöpfe. Sowohl männliches wie auch weibliches Kupplungselement weisen einen flächigen Kopf auf, sodass der Kugelkopf des männlichen Kupplungselements und die Kugelpfanne des weiblichen Kupplungselements durch diesen abgedeckt sind. Um die Kupplungselemente in entsprechenden Stoffabschnitten befestigen zu können, werden Federringe auf zylindrische Bereiche der Kupplungselemente aufgeschoben. Insofern stellen diese Kupplungselemente nicht durch ihre eigene integrale Struktur Befestigungsmöglichkeiten mit den ihnen zugeordneten Bauteilen bzw. Stoffteilen zur Verfügung. Die Verbindung der beiden Kupplungselemente erfolgt auch hier über eine Rastverbindung zwischen dem männlichen und dem weiblichen Kupplungselement.

Eine weitere zweitteilige Steckkupplung offenbart DE 201 07 949 U1. Ein weibliches Kupplungselement bestehend aus einem elastischen Material wird in eine Installationsrichtung in eine Bauteilöffnung eingesetzt. Zur Unterstützung der Installation weist das weibliche Kupplungselement eine konische Form auf, die sich in Installationsrichtung verjüngt. Um den Halt des weiblichen Kupplungselements zu unterstützen und das weibliche Kupplungselement nicht über die Bauteilöffnung hinauszudrücken, begrenzt ein sich senkrecht zur Installationsrichtung erstreckender Flansch die Einsetzbewegung in Installationsrichtung. Innerhalb des weiblichen Kupplungselements ist eine Kugelpfanne vorgesehen, in der ein männliches Kupplungselement, im Speziellen ein Bolzen mit Kugelkopf, verriegelbar ist. Um eine Verbindung zwischen zwei Bauteilen herzustellen, wird der Bolzen mit Kugelkopf ebenfalls in Installationsrichtung in dem weiblichen Kupplungselement verrastet. Somit unterstützt die Einsetzbewegung des Bolzens mit Kugelkopf in die Kugelpfanne neben der Herstellung der Verbindung zwischen den Bauteilen auch die Installation und den festen Sitz des weiblichen Kupplungselements in der Bauteilöffnung. Aber auch hier steht das weibliche Kupplungselement über die Bauteiloberfläche hinaus. Dies ermöglicht eine gewisse Beweglichkeit des Kugelkopfes des männlichen Kupplungselements nach erfolgter Installation, da sich der Kugelkopf gemeinsam mit dem größten Teil des weiblichen Kupplungselements oberhalb der Bauteiloberfläche elastisch bewegbar und auslenkbar befindet. Aufgrund der gleichgerichteten Installationsrichtung des weiblichen Kupplungselementsund und der Herstellung der Verbindung zwischen dem weiblichen und dem männlichen Kupplungselement werden die zwei Bauteile bei zweiseitiger Zugänglichkeit miteinander verbunden.

DE 20 2015 005 870 beschreibt ebenfalls eine zweiteilige Steckkupplung bestehend aus einem männlichen und einem weiblichen Kupplungselement. Die Kupplungselemente zeichnen sich durch einen flächigen Kopfabschnitt aus, der eine nahezu fluchtende Anordnung bezogen auf eine Bauteiloberfläche eines Bauteils ermöglicht. Die hier beschriebenen Kupplungselemente sind in einer Bauteilöffnung installierbar, wobei der genannte flächige Kopfabschnitt nach Installation in der Bauteilöffnung an der Bauteiloberfläche sichtbar bleibt. Diese Konstruktion hat gerade ästhetische Beweggründe, da sie trotz eines geringen Bauraums der Kupplungselemente eine optimale Anpassung der Kupplungselemente an die Bauteiloberfläche ermöglicht. Aufgrund dieser ästhetischen Konstruktion und Anordnung der Kupplungselemente existiert jedoch kein Spielraum, um mögliche Freiräume zwischen männlichem und weiblichem Kupplungselement auszugleichen. Denn da die Kupplungselemente direkt in der Bauteilöffnung installiert werden, sind die Kupplungselemente in ihrer Positionierung nicht variabel. Dies wäre beispielsweise möglich, wenn die Kupplungselemente oder zumindest eines der Kupplungselemente in einer Fassung an einer Unterseite eines Bauteils aufgenommen werden würde. Da diese Ausgleichsmöglichkeit von Toleranzen bzw. Freiräumen nicht besteht, führt der Ausgleich dieser Toleranzen häufig zu einer Störung des ästhetischen Erscheinungsbildes der verbundenen Bauteile. Wenn da das männliche und das weibliche Kupplungselement in die Verbindung gezwungen werden müssen, ist dazu häufig ein Verbiegen bzw. Verformen zumindest eines der miteinander zu verbindenden Bauteile erforderlich. Handelt es sich bei dem zu verbindenden Bauteil um ein Motorcover, so wird dessen ursprüngliche Form durch die herzustellende Verbindung auf unkontrollierte und vor allem unästhetische Weise gestört.

Eine Werkzeugverlängerung für einen Steckschlüssel ist in US 2011/0303053 A1 beschrieben. Diese umfasst eine gelenkige Reihe von Gelenkadapterenden mit Vierkantantrieb und Zwischenkupplungen mit Sechskantkugelkopf- und Innensechskantgelenken. Drei solcher Zwischenkupplungen zusammen in einer Reihe ermöglichen einen Gesamtbiegung von 90 Grad. Jede Zwischenkupplung hat einen Körper, über den eine biegsame Steuerabdeckung gespannt ist. Jede Verbindung aus Kugelkopf und Buchse wird von einer entsprechenden biegsamen Steuerabdeckung überbrückt, die dann über einer Haltelippe direkt unter einem Hals einrastet.

Eine Vorrichtung zur Verbindung von Konstruktionsteilen oder Konstruktionselementen miteinander ist in DE 32 32 926 A beschrieben. Der Anker, der an einem der miteinander zu verbindenden Teile anschweißbar ist und am anderen Teil angreifen kann, besteht aus einem kopflosen Bolzen mit gegenüber dessen Mittelteil verjüngten Endteilen, einer auf den Bolzen aufsteckbaren Klemmhülse, die einen verjüngten Endteil des Bolzens hintergreifen kann, sowie einem Verriegelungselement, das auf die Klemmhülse aufsteckbar ist, die Klemmhülse in der aufgeklemmten Lage sichert und eine am zu befestigenden Teil angreifende Halterung aufweist.

DE 198 31 897 A1 beschreibt eine Steckkupplung zum Verbinden zweier Fluidleitungen von denen eine eine Halterippe aufweist. Die Steckkupplung hat eine Hülse mit Durchbrüchen, eine in ihr verschiebbare Rasteinrichtung mit Haltearmen, die Haken zum Hintergreifen der Halterippe und eine äußere Schrägfläche aufweisen. Die Schrägfläche wird beim Auseinanderbewegen von Hülse und Rasteinrichtung gegen eine Vorderkante eines den Haken axial verschiebbar aufnehmenden Durchbruchs gedrückt, so dass er fester an der Halterippe anliegt. Eine innere Schrägfläche der Haken drückt beim Auseinanderziehen von Rasteinrichtung und Fluidleitung gegen die Halterippe, so dass die Haltearme in einer Entriegelungslage der Rasteinrichtung, in der die Haken mit ihrer äußeren Schrägfläche nicht gegen die Vorderkante des betreffenden Durchbruchs gedrückt sind, gespreizt werden und ein Entkuppeln ermöglichen. Die Rasteinrichtung hat ferner elastische Entriegelungsarme, die mit einem äußeren Teil axial verschiebbar durch jeweils einen der Durchbrüche ragen. Um das Entkuppeln zu vereinfachen, bewirken die Entriegelungsarme durch radiales Zusammendrücken ihrer äußeren Teile über Schrägflächen eine Axialverschiebung der Rasteinrichtung in die Entriegelungslage.

Es ist daher die Aufgabe vorliegender Erfindung, mögliche Freiräume zwischen zwei miteinander zu verbindenden Kupplungselementen derart auszugleichen, dass dieser Ausgleich des Freiraums bzw. der vorhandenen Toleranzen gerade nicht zu einer Verformung der Bauteile oder zu einer ästhetischen Beeinträchtigung der herzustellenden Verbindung führt.

### 3. Zusammenfassung der Erfindung

Die obige Aufgabe wird durch einen Verlängerungsadapter einer Steckkupplung gemäß dem unabhängigen Patentanspruch 1, durch ein Herstellungsverfahren gemäß dem unabhängigen Patentanspruch 12, durch ein Montageverfahren des Verlängerungsadapters gemäß dem unabhängigen Patentanspruch 15 sowie durch eine Verbindung zwischen zwei Bauteilen mit dem Verlängerungsadapter gemäß dem unabhängigen Patentanspruch 20 gelöst. Vorteilhafte Ausgestaltungen und Weiterentwicklungen vorliegender Erfindung gehen aus der folgenden Beschreibung, den Zeichnungen sowie den anhängenden Patentansprüchen hervor.

Die vorliegende Erfindung offenbart einen Verlängerungsadapter einer Steckkupplung, mit dem ein Freiraum zwischen einem männlichen Kupplungselement an einem ersten Bauteil und einem weiblichen Kupplungselement an einem zweiten Bauteil verbindend überbrückbar ist. Dieser Verlängerungsadapter weist die folgenden Merkmale auf: mindestens ein männliches Kupplungsende, das in das mindestens eine weibliche Kupplungselement einsteckbar ist, ein weibliches Kupplungsende, in dem das männliche Kupplungselement aufnehmbar ist und das mit dem mindestens einen männlichen Kupplungsende vorzugsweise über ein Zwischenstück verbunden ist, und ein in axialer Richtung des Verlängerungsadapters versetzbar angeordnetes Verriegelungselement, mit dem in einer Verriegelungsposition zumindest teilweise umgebend das weibliche Kupplungsende ein Lösen eines männlichen Kupplungselements aus dem weiblichen Kupplungsende verhindert ist.

Wie bereits oben beschrieben worden ist, sind Steckkupplungen zur Verbindung von zwei Bauteilen allgemein bekannt. Eine derartige Steckkupplung besteht aus einem männlichen Kupplungselement, beispielsweise ein Bolzen mit einem Kugelkopf, und aus einem weiblichen Kupplungselement, beispielsweise eine zum Kugelkopf passend ausgebildete Kugelpfanne. Der Verlängerungsadapter hat vorzugsweise eine langgestreckte Struktur mit einer Längsachse und einem ersten und einem zweiten Ende. An den beiden gegenüberliegend angeordneten Enden sind ein männliches Kupplungsende und ein weibliches Kupplungsende angeordnet, die jeweils in einem komplementär dazu ausgebildeten Kupplungselement verrastbar bzw. mit diesem verbindbar sind. Gemäß einer bevorzugten Ausführungsform des Verlängerungsadapters ist dieser Y-förmig ausgebildet, so dass er zwei männliche Kupplungsenden und ein weibliches Kupplungsende aufweist. Daraus folgt, dass die Kupplungsenden des Verlängerungsadapters grundsätzlich die bekannten Verbindungskonzepte und Verbindungskonstruktionen von Steckkupplungen verwenden. Um aber einen verlässlichen Halt des Verlängerungsadapters auf dem männlichen Kupplungselement sicherzustellen, wird mithilfe des Verriegelungselements ein Aufnahmeraum für das männliche Kupplungselement im weiblichen Kupplungsende derart verriegelt, dass das männliche Kupplungselement nicht mehr aus dem weiblichen Kupplungsende des Verlängerungsadapters lösbar ist. Zwar ist das männliche Kupplungselement in seinem verbundenen Zustand weiterhin bevorzugt in einem bestimmten Raumwinkel verschwenkbar, jedoch kann es nicht in axialer Richtung aus dem weiblichen Kupplungsende herausgelöst werden. Diese Konstruktion stellt sicher, dass bei einem Lösen einer Verbindung zwischen zwei Bauteilen mittels Steckkupplung weiterhin nur die Steckkupplung gelöst wird. Somit lösen sich nicht gleichzeitig der Verlängerungsadapter und die Steckkupplung, wodurch zusätzlicher Montageaufwand verhindert wird. Um diese Art der Verriegelung sowie das Zusammenwirken zwischen dem Verriegelungselement und dem weiblichen Kupplungsende zu gewährleisten, sind verschiedene Konstruktionen des Verlängerungsadapters bevorzugt, wie unten erläutert ist. Die Y-förmige Gestalt des Verlängerungsadapters ermöglicht, den Befestigungsbereich zwischen Verlängerungsadapter und dem zweiten Bauteil über die Anzahl der Steckverbindungen zu vergrößern. Dadurch kann ein schwer zugängliches zweites Bauteil in einem begrenzten Befestigungsbereich stärker mit Hilfe mehrerer Steckverbindungen gehalten werden. Daraus folgt, dass neben der bevorzugten Y-Form des Verlängerungsadapters auch andere Formen mit mehr als einem männlichen und/oder mit mehr als einem weiblichen Kupplungsende herstellbar sind.

Vorzugsweise umfasst das mindestens eine männliche Kupplungsende des Verlängerungsadapters eine Verdickung, insbesondere einen Kugelkopf. Zudem ist es bevorzugt, dass das weibliche Kupplungsende des Verlängerungsadapters den oben genannten Aufnahmeraum umfasst, der durch eine Mehrzahl von Wandelementen definiert ist, die den Aufnahmeraum zueinander beabstandet umgeben. Es ist zudem bevorzugt, den Aufnahmeraum für das männliche Kupplungselement mit Hilfe einer elastischen Wand zu umgeben. Beim Einsetzen des männlichen Kupplungselements in den Aufnahmeraum gibt die elastische Wand radial auswärts federnd nach. Sobald das Verriegelungselement die elastische Wand zumindest teilweise umgibt, wird das federnde Nachgeben der Wand eingeschränkt und das männliche Kupplungselement im Aufnahmeraum verriegelt gehalten.

Der erfindungsgemäß bevorzugte Verlängerungsadapter bildet aufgrund seiner Konstruktion eine verriegelte Verbindung mit dem männlichen Kupplungselement aus. Im Gegensatz dazu ist eine Verbindung zwischen dem männlichen Kupplungsende und dem weiblichen Kupplungselement nicht verriegelt. Somit ist in bekannter Weise und mit den bekannten Kräften eine Verbindung zwischen dem männlichen Kupplungsende des Verlängerungsadapters und dem weiblichen Kupplungselement herstellbar. Diese unterschiedlich starken Verbindungskräfte am weiblichen Kupplungsende und am männlichen Kupplungsende gewährleisten, dass bei einem Lösen der Verbindung zwischen den beiden Bauteilen nur die Verbindung zwischen dem männlichen Kupplungsende und dem weiblichen Kupplungselement gelöst wird. Denn wenn die Verriegelung der Verbindung zwischen dem weiblichen Kupplungsende und dem männlichen Kupplungselement nicht vorhanden wäre, dann bestünde bei einem Lösen der Verbindung zwischen den beiden Bauteilen die Gefahr, dass gleichzeitig die beiden Verbindungen zwischen den beiden Kupplungsenden und dem jeweiligen Kupplungselement gelöst werden würden. Dies würde ein undefinierbares Vorgehen während der Demontage eines der Bauteile zur Folge haben, weil sich unkontrolliert eine oder beide Verbindungen zwischen dem jeweiligen Kupplungsende und dem dazugehörigen Kupplungselement lösen könnten. Durch die Wirkung des Verriegelungselements wird nach dem Verbinden des Verlängerungsadapters mit dem männlichen Kupplungselement die Verbindung zumindest in axialer Richtung fixiert. Dies ist vergleichbar mit einer Verwendung eines nun längeren männlichen Kupplungselements, wobei die verriegelte Verbindung zwischen männlichem Kupplungselement und weiblichem Kupplungsende des Verlängerungsadapters noch einen zusätzlichen Bewegungsspielraum eröffnet.

Der Aufnahmeraum, der bevorzugt eine Kugelpfanne definiert, weist als umgebende Außenwand eine Mehrzahl von zueinander beabstandeten Wandelementen auf. Diese Wandelemente sind vorzugsweise in axialer Richtung streifenartig verlaufend ausgebildet, so dass sie beim Einsetzen eines männlichen Kupplungselements radial auswärts federn können. In Abhängigkeit von der Flexibilität des Materials des weiblichen Kupplungsendes ist die Anzahl der Wandelemente einstellbar, um die für das Einsetzen des männlichen Kupplungselements erforderliche Kraft festzulegen. Alternativ zur Mehrzahl der Wandelemente ist es ebenfalls bevorzugt, das weibliche Kupplungsende des Verlängerungsadapters als einen geschlossenen Dom mit Aufnahmeraum bereitzustellen. Da dieser Dom aus einem ausreichend elastischen Material besteht, ist das männliche Kupplungselement in diesem Dom, vorzugsweise eine Kugelpfanne, einsetzbar. Um nun bevorzugt das männliche Kupplungselement innerhalb dieses weiblichen Kupplungsendes verriegeln zu können, wird das oben genannte Verriegelungselement angelehnt an die äußere Wand des weiblichen Kupplungsendes angeordnet. Da sich das Verriegelungselement nicht radial nach außen bewegen lässt, verhindert bevorzugt das Verriegelungselement ein elastisches Verformen des weiblichen Kupplungsendes und somit ein Lösen des männlichen Kupplungselements aus dem weiblichen Kupplungsende.

Gemäß einer bevorzugten Ausführungsform des erfindungsgemäßen Verlängerungsadapters ist das zumindest teilweise umgebende Verriegelungselement eine ringförmige oder eine U-förmige Federklammer. Gemäß einer weiteren bevorzugten Ausführungsform des Verlängerungsadapters ist das Verriegelungselement ein Mutterelement, das auf ein Gewinde an einer radialen Außenseite des weiblichen Kupplungsendes aufschraubbar ist. Ebenfalls bevorzugt wird das Verriegelungselement durch ein Ringelement gebildet, das auf einer radialen Außenseite des weiblichen Kupplungsendes aufsteckbar ist. Allgemein umgibt das Verriegelungselement zumindest teilweise das weibliche Kupplungsende, so dass ein darin aufgenommenes männliches Kupplungselement darin in seiner axialen Position blockiert ist. Dies ist beispielsweise durch eine nicht vollständig umlaufende Federklammer, die kreisförmig oder U-förmig ist, realisierbar. Gemäß anderer bevorzugter Ausgestaltungen ist das Verriegelungselement vollständig umlaufend ausgebildet, wie oben beschrieben worden ist und unten näher ausgeführt wird.

Wie aus den obigen bevorzugten Alternativen des Verriegelungselements hervorgeht, sind unterschiedliche Konstruktionen des Verlängerungsadapters möglich, ohne dass dabei die Funktion des Verlängerungsadapters verloren geht. Zudem werden durch die unterschiedlichen Konstruktionen des Verriegelungselements unterschiedliche Materialien in Abstimmung auf den jeweiligen Anwendungsfall einsetzbar. Beispielsweise besteht die bevorzugte ringförmige Federklammer aus Metall oder aus Kunststoff. Diese ist durch bevorzugten manuellen Druck des Werkers aufweitbar, so dass das Verriegelungselement in eine dafür vorgesehene Verriegelungsposition am weiblichen Kupplungsende versetzbar ist. Gemäß einer anderen bevorzugten Ausführungsform weist die radiale Außenseite des weiblichen Kupplungsendes des Verlängerungsadapters ein Außengewinde auf. Auf dieses Außengewinde ist das Mutterelement aufschraubbar, das im nichtverriegelten Zustand des Verlängerungsadapters zwischen den beiden Kupplungsenden angeordnet ist. Sobald das Mutterelement auf das weibliche Kupplungsende aufgeschraubt worden ist, ist eine Bewegung der radialen Außenwand des weiblichen Kupplungsendes radial auswärts verhindert. Dabei ist nicht entscheidend, ob die Außenwand des weiblichen Kupplungsendes aus einer Mehrzahl von Wandelementen oder aus einer durchgängigen elastischen Wand besteht. Denn das Mutterelement blockiert aufgrund seiner starren Form jegliche Bewegung der radialen Außenwand des weiblichen Kupplungsendes nach außen. In gleicher Weise wie das Mutterelement blockiert auch das genannte Ringelement die radiale Außenseite des weiblichen Kupplungsendes gegen eine Bewegung in eine Richtung radial auswärts.

Gemäß einer weiteren bevorzugten Ausführungsform des Verlängerungsadapters umfasst das Ringelement eine Mehrkantkontur. Eine derartige Mehrkantkontur, die beispielsweise in einem Sechskant oder dergleichen bestehen kann, erleichtert das axiale Versetzen des Ringelements auf das weibliche Kupplungsende.

Es ist des Weiteren bevorzugt, das Verriegelungselement des Verlängerungsadapters mit zumindest einem Raststeg auszustatten, der das Verriegelungselement in einer Basisposition und/oder der Verriegelungsposition fixiert. Gemäß einer weiteren bevorzugten Ausführungsform des erfindungsgemäßen Verlängerungsadapters ist die Basisposition des Verriegelungselements zwischen dem männlichen und dem weiblichen Kupplungsende vorgesehen. Das Verriegelungselement ist vorzugsweise zumindest in der Basisposition verrastbar.

Vorliegende Erfindung umfasst zudem eine Verbindung zwischen zwei Bauteilen mit einem Verlängerungsadapter gemäß einer der oben beschriebenen Ausführungsformen, in der ein erstes Bauteil mit einem männlichen Kupplungselement und ein zweites Bauteil mit einem weiblichen Kupplungselement ausgestattet ist, so dass der Verlängerungsadapter einen Freiraum zwischen dem ersten und dem zweiten Bauteil durch eine Verbindung mit dem männlichen Kupplungselement und dem weiblichen Kupplungselement überbrückt.

Des Weiteren umfasst vorliegende Erfindung ein Herstellungsverfahren für einen Verlängerungsadapter, insbesondere einen Verlängerungsadapter gemäß einer der oben beschriebenen Ausfiihrungsformen. Das Herstellungsverfahren weist die folgenden Schritte auf: Bereitstellen einer ersten Spritzgussform, die komplementär zu dem Verlängerungsadapter ausgebildet ist, der ein männliches Kupplungsende, das in ein weibliches Kupplungselement einsteckbar ist, ein weibliches Kupplungsende, in dem ein männliches Kupplungselement aufnehmbar ist und welches mit dem männlichen Kupplungsende über ein Zwischenstück verbunden ist, aufweist, Spritzgießen und Entformen des Verlängerungsadapters und Anordnen eines in axialer Richtung des Verlängerungsadapters versetzbaren Verriegelungselements auf dem Verlängerungsadapter.

Erfindungsgemäß bevorzugt ist der Verlängerungsadapter ein Spritzgussteil. Entsprechend ist die Spritzgussform komplementär zu dem Verlängerungsadapter geformt. Das weibliche und das männliche Kupplungsende des Verlängerungsadapters werden daher durch die Spritzgussform komplementär derart vorgegeben, dass es mit bekannten Kupplungselementen zusammenpasst. Nachdem der länglich geformte Verlängerungsadapter spritzgegossen und entformt worden ist, wird das Verriegelungselement auf dem Verlängerungsadapter angeordnet. Vorzugsweise befindet sich zu diesem Zeitpunkt das Verriegelungselement in einer Basisposition, in der das männliche Kupplungselement noch frei in das weibliche Kupplungsende eingesetzt und aus diesem gelöst werden kann. Erst wenn das Verriegelungselement angrenzend an die radiale Außenwand des weiblichen Kupplungsendes angeordnet ist, wird durch das Verriegelungselement ein Lösen des männlichen Kupplungselements aus dem weiblichen Kupplungsende erzielt.

Gemäß einer bevorzugten Ausführungsform umfasst das Herstellungsverfahren den weiteren Schritt des Spritzgießens in einer zweiten Spritzgussform und Entformens des Verriegelungselements aus Kunststoff aus der zweiten Spritzgussform und danach Anordnen auf dem Verlängerungsadapter. Entsprechend den oben beschriebenen bevorzugten Ausführungsformen des Verlängerungsadapters sind unterschiedliche Formen bzw. Ausgestaltungen des Verriegelungselements nutzbar. Während gemäß einer Ausführungsform das Verriegelungselement aus einer Federklammer besteht, sind die anderen Verriegelungselemente beispielsweise durch das oben genannte Spritzgussverfahren herstellbar. Entsprechend gibt dann die Spritzgussform in komplementärer Ausgestaltung das oben beschriebene Mutterelement, das Ringelement oder ein Ringelement mit Mehrkantkontur vor.

Es ist ebenfalls bevorzugt, in der Gestaltung der Spritzgussform bereits Verrastungsstege vorzusehen, die integral mit dem Ringelement oder dem Ringelement mit Mehrkantkontur ausgebildet sind. Diese Verrastungsstege erstrecken sich bevorzugt in axialer Richtung des Verriegelungselements. Zudem wirken diese Verrastungsstege ebenfalls bevorzugt mit einer oder mehreren Raststrukturen am Verlängerungsadapter zusammen. Diese Raststrukturen gewährleisten ein Verrasten und somit ein Absichern der Position des Verriegelungselements. Daher ist es zunächst bevorzugt, eine Rastposition in Kombination mit der Verriegelungsposition des Verriegelungselements vorzusehen. Gemäß einer weiteren bevorzugten Ausführungsform weist eine Basisposition zwischen dem weiblichen und männlichen Kupplungsende des Verlängerungsadapters ebenfalls eine Rastposition auf. Gerade die Rastmöglichkeiten in Kombination mit der Basisposition realisieren eine Verliersicherung für den Verlängerungsadapter mit Verriegelungselement, bevor dieser eingebaut worden ist.

Gemäß einer weiteren bevorzugten Ausführungsform erfolgt das Spritzgießen des Verriegelungselements in der ersten Spritzgussform mit dem darin enthaltenen Verlängerungsadapter mit Hilfe eines 2K-Spritzgussverfahrens, so dass das Verriegelungselement reibschlüssig und/oder mit Hilfe von zumindest einem Abrisssteg am Verlängerungsadapter lösbar befestigt ist. Beim bekannten 2K-Spritzgussverfahren werden in nur einer Spritzgussform mit mindestens einem ersten und einem zweiten Kunststoffschuss zwei Teile, nämlich der Verlängerungsadapter und das Verriegelungselement, hergestellt. Dabei können die Kunststoffschüsse den gleichen oder unterschiedliche Kunststoffe verwenden. Die Kunststoffschüsse werden zeitlich versetzt zueinander durchgeführt, so dass sich die Kunststoffe der Kunststoffschüsse nicht miteinander vermischen.

Vorliegende Erfindung umfasst zudem ein Montageverfahren des Verlängerungsadapters, mit dem der Freiraum zwischen einem männlichen Kupplungselement und einem weiblichen Kupplungselement überbrückt wird und der mindestens ein männliches Kupplungsende, das in das weibliche Kupplungselement einsteckbar ist, und ein weibliches Kupplungsende, in dem das männliche Kupplungselement aufnehmbar ist und das mit dem mindestens einen männlichen Kupplungsende über ein Zwischenstück verbunden ist, sowie ein in axialer Richtung des Verlängerungsadapters versetzbar angeordnetes Verriegelungselement aufweist, wobei das Montageverfahren die folgenden Schritte umfasst: Einstecken des mindestens einen männlichen Kupplungsendes in das mindestens eine weibliche Kupplungselement, Einstecken des männlichen Kupplungselements in das weibliche Kupplungsende des Verlängerungsadapters und Versetzen des Verriegelungselements in eine Verriegelungsposition, in der das Verriegelungselement das weibliche Kupplungselement zumindest teilweise umgibt, so dass ein Lösen des männlichen Kupplungselements aus dem weiblichen Kupplungsende verhindert ist.

Vorzugsweise umfasst das Montageverfahren den weiteren Schritt des Aufweitens einer ringförmigen Federklammer als Verriegelungselement, so dass die Federklammer auf das weibliche Kupplungsende aufsteckbar ist. In gleicher Weise ist es ebenfalls bevorzugt, ein mutterähnliches Verriegelungselement auf das weibliche Kupplungsende aufzuschrauben. Vorzugsweise umfasst dazu das weibliche Kupplungsende an seiner radialen Außenseite ein an das mutterähnliche Verriegelungselement angepasstes Außengewinde. Gemäß einer weiteren bevorzugten Ausführungsform des erfindungsgemäßen Montageverfahrens wird ein ringartiges Verriegelungselement auf das weibliche Kupplungsende aufgesteckt. Weiterhin bevorzugt wird ein zweites männliches Kupplungsende in ein zweites weibliches Kupplungselement eingesteckt, wobei der Verlängerungsadapter Y-förmig ausgebildet ist.

Des Weiteren umfasst vorliegende Erfindung eine Verbindung zwischen zwei Bauteilen mit einem Verlängerungsadapter der oben beschriebenen Ausgestaltungen, in der ein erstes Bauteil mit einem männlichen Kupplungselement und ein zweites Bauteil mit mindestens einem weiblichen Kupplungselement ausgestaltet sind, so dass der Verlängerungsadapter den Freiraum zwischen dem ersten und dem zweiten Bauteil durch eine Verbindung mit dem männlichen Kupplungselement und dem mindestens einen weiblichen Kupplungselement überbrückt.

### 4. Kurze Beschreibung der begleitenden Zeichnungen

Die bevorzugten Ausführungsformen vorliegender Erfindung werden unter Bezugnahme auf die begleitendende Zeichnung näher erläutert. Es zeigen:
- Fig. 1: eine perspektivische Darstellung einer Verbindung zwischen zwei Bauteilen mithilfe des bevorzugten Verlängerungsadapters,

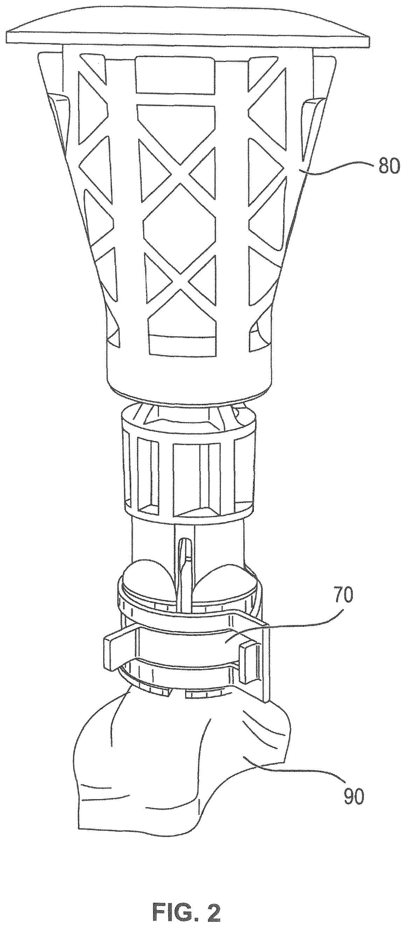

- Fig. 2: der bevorzugte Verlängerungsadapter in Kombination mit einem männlichen und einem weiblichen Kupplungselement,
- Fig. 3: eine perspektivische Ansicht einer bevorzugten Ausführungsform des Verlängerungsadapters mit einer Federklammer als Verriegelungselement,
- Fig. 4: eine weitere bevorzugte Ausführungsform des Verlängerungsadapters mit einer Federklammer als Verriegelungselement,
- Fig. 5: eine teilweise Schnittansicht der Ausführungsform gemäß Fig. 4,
- Fig. 6: der Verlängerungsadapter gemäß Fig. 4 mit eingesetztem männlichen Kupplungselement und der Federklammer in Verriegelungsposition,
- Fig. 7: eine teilweise Schnittansicht der Ausführungsform gemäß Fig. 6,
- Fig. 8a, b, c: verschiedene Montagesequenzen eines bevorzugten Verriegelungselements auf dem Verlängerungsadapter und des Verlängerungsadapters auf dem männlichen Kupplungselement,
- Fig. 9a, b, c: eine schematische Darstellung bevorzugter Installationsschritte des Verlängerungsadapters,
- Fig. 10a, b: der Verlängerungsadapter mit einem weiteren bevorzugten Verriegelungselement und dessen Installation,
- Fig. 11: eine weitere bevorzugte Ausführungsform eines Verriegelungselements,
- Fig. 12: eine weitere bevorzugte Ausführungsform des Verlängerungsadapters,
- Fig. 13: eine weitere bevorzugte Ausführungsform des Verlängerungsadapters,
- Fig. 14: eine weitere bevorzugte Ausführungsform des Verlängerungsadapters,
- Fig. 15: ein Flussdiagramm eines bevorzugten Herstellungsverfahrens des bevorzugten Verlängerungsadapters und
- Fig. 16: ein Flussdiagramm eines bevorzugten Montageverfahren des bevorzugten Verlängerungsadapters.

### 5. Detaillierte Beschreibung der bevorzugten Ausführungsformen

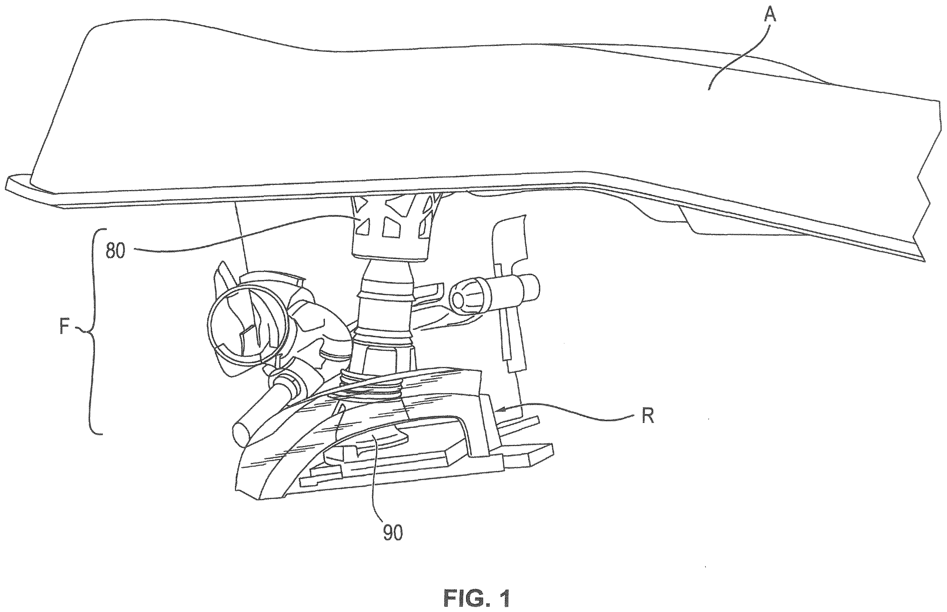

Figur 1 zeigt eine Verbindung zwischen einer Rahmenstruktur R als ein erstes Bauteil und einer Abdeckung A als ein zweites Bauteil. Die Abdeckung A ist mit einem weiblichen Kupplungselement 80 ausgestattet, während an der Rahmenstruktur R ein männliches Kupplungselement 90 befestigt ist. Das männliche Kupplungselement 90 ist bevorzugt ein Kugelbolzen, während das weibliche Kupplungselement 80 passend dazu als Kugelpfanne ausgebildet ist. Als männliches Kupplungselement 90 und als weibliches Kupplungselement 80 sind auch andere bekannte Steckkupplungen einsetzbar, wie beispielsweise vom mit Bezug auf den Stand der Technik diskutiert worden ist.

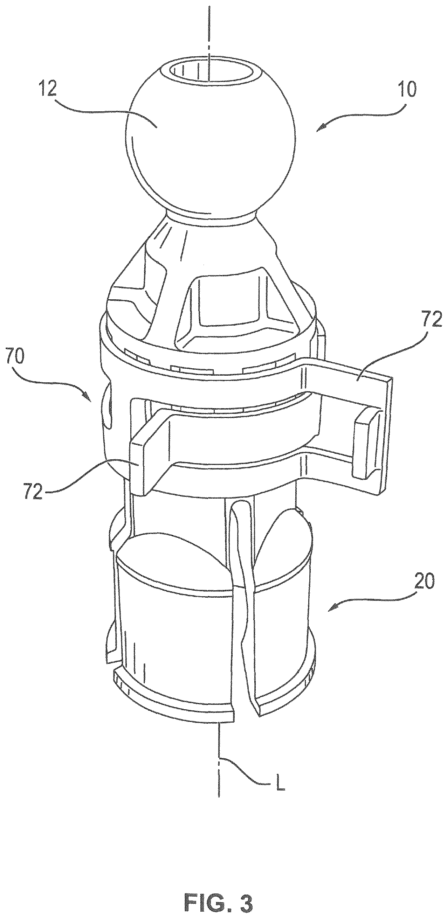

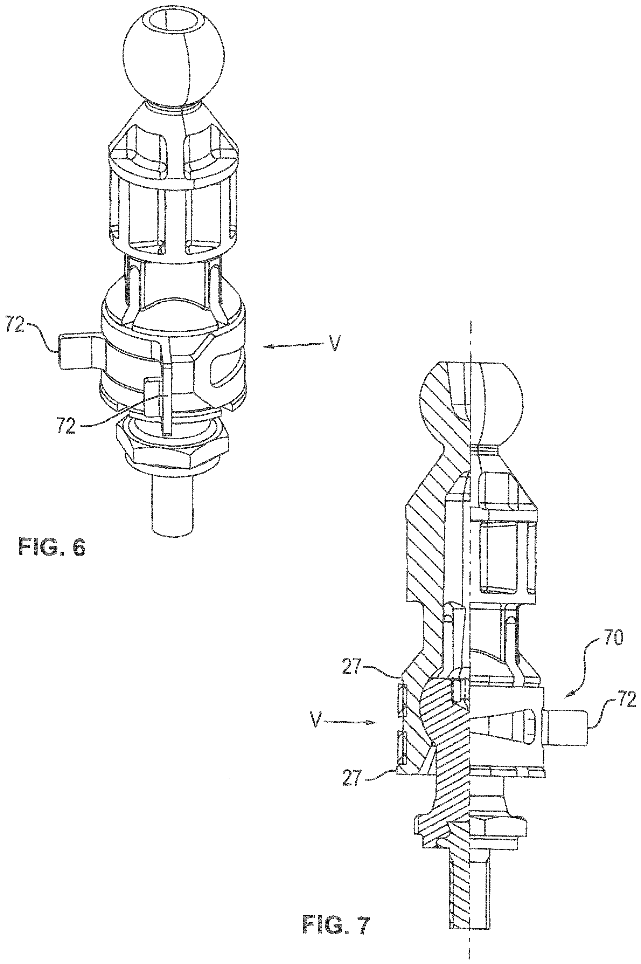

In Figur 1 ist deutlich erkennbar, dass zwischen der Abdeckung A und der Rahmenstruktur R ein Freiraum F vorhanden ist. Dieser kann nicht allein durch das männliche 90 und das weibliche Kupplungselement 80 überbrückt werden. Zur Überbrückung des Freiraums F und zum Verbinden der Abdeckung A mit der Rahmenstruktur R ist ein Verlängerungsadapter 1 vorgesehen, der vergrößert und in unterschiedlichen bevorzugten Ausführungsformen in den Figuren 3 bis 8 und 10 bis 14 gezeigt ist. Zur Herstellung einer Verbindung mit der Rahmenstruktur R und der Abdeckung A weist der Verlängerungsadapter 1 entsprechend ein männliches 10 und ein weibliches Kupplungsende 20 auf. Die Kupplungsenden 10, 20 sind passend und vorzugsweise komplementär zum weiblichen 80 und männlichen Kupplungselement 90 ausgebildet. Zwischen dem männlichen 80 und dem weiblichen Kupplungselement 90 ist bevorzugt ein Zwischenstück 50 vorgesehen, das unten näher erläutert ist. Das männliche Kupplungsende 10 ist im weiblichen Kupplungselement 80 aufgenommen und wird darin gehalten. Ein bevorzugtes weibliches Kupplungselement 80 ist in DE 20 2015 005 870 beschrieben, welches hiermit durch Bezugnahme aufgenommen ist. Es umfasst eine Kugelpfanne, in die das männliche Kupplungsende 10 einschnappt, um darin lösbar gehalten zu werden.

Während der gezeigte Verlängerungsadapter 1 eine langgestreckte Struktur darstellt, ist ebenfalls eine Konstruktion mit bevorzugt mehreren männlichen Kupplungsenden 10 (nicht gezeigt) nutzbar. Gemäß einer Ausführungsform ist dazu der Verlängerungsadapter 1 Y-förmig ausgebildet. Es sind aber auch andere Formen denkbar.

Das männliche Kupplungsende 10 umfasst bevorzugt einen Kugelkopf 12, der ebenfalls bevorzugt abgeflacht, oval, kugelförmig, kugelähnlich, als asymmetrische Verdickung oder ähnlich ausgebildet sein kann. Das männliche Kupplungsende 10 bildet ein Ende des langgestreckten Verlängerungsadapters 1. In Längsrichtung des Verlängerungsadapters 1 gegenüberliegend zum männlichen Kupplungsende 10 ist das weibliche Kupplungsende 20 angeordnet. Das weibliche Kupplungsende 20 ist an die Aufnahme eines Kugelkopfes eines Kugelbolzens als männliches Kupplungselement 90 oder einer ähnlichen bekannten Struktur angepasst, um eine formschlüssige Verbindung mit dem männlichen Kupplungselement 90 herzustellen. Vorzugsweise umfasst das weibliche Kupplungsende 20 dazu einen Aufnahmeraum 22 in der bevorzugten Ausgestaltung einer Kugelpfanne. Anstelle der Kugelpfanne sind auch andere Formen des Aufnahmeraums 22 bevorzugt, solange mit ihnen eine verrastende formschlüssige Verbindung mit einem entsprechend geformten männlichen Kupplungselement 90 herstellbar ist.

Der Aufnahmeraum 22 ist umfänglich durch eine Mehrzahl von Wandelementen 24 eingeschlossen. Bevorzugt sind mindestens zwei Wandelemente 24 vorgesehen, wobei ebenfalls drei bis 8, vorzugsweise vier Wandelemente 24 für einen optimalen Halt des männlichen Kupplungselements 90 im Aufnahmeraum 22 sorgen. Alternativ bevorzugt ist eine durchgehende Wand aus elastischem Material vorgesehen. Eine radiale Innenseite 25 des Wandelements 24 bzw. der Wand legt die Form des Aufnahmeraums 22, hier die Kugelpfanne, fest. Entsprechend geben die radialen Innenseiten 25 der Wandelemente 24 oder der Wand gemeinsam die Innenkontur des Aufnahmeraums 22 vor.

Weiterhin bevorzugt sind die Wandelemente 24 aufgrund ihrer Materialwahl und/oder ihrer Dimensionierung federnd ausgebildet, während die durchgehende Wand bevorzugt aus elastischem Material besteht, das in sich nachgibt. Sobald das männliche Kupplungselement 90 aus dem Aufnahmeraum 22 gelöst oder in diesen eingesetzt wird, federn die Wandelemente 24/die Wand radial nach außen, um danach wieder in ihre Ausgangsposition zurückzukehren.

Über diese Bewegung ist bevorzugt ein Einschnappen oder Verrasten des männlichen Kupplungselements 90 im Aufnahmeraum 22 gewährleistet. Die folgenden Erläuterungen zur Verriegelung des männlichen Kupplungselements 90 im Aufnahmeraum 22 gelten in gleicher Weise für die Wandelemente 24 und die durchgehende elastische Wand (nicht gezeigt).

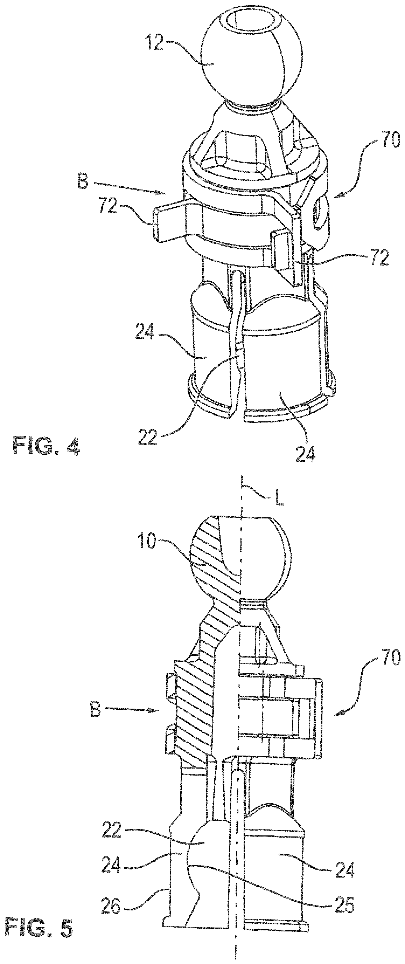

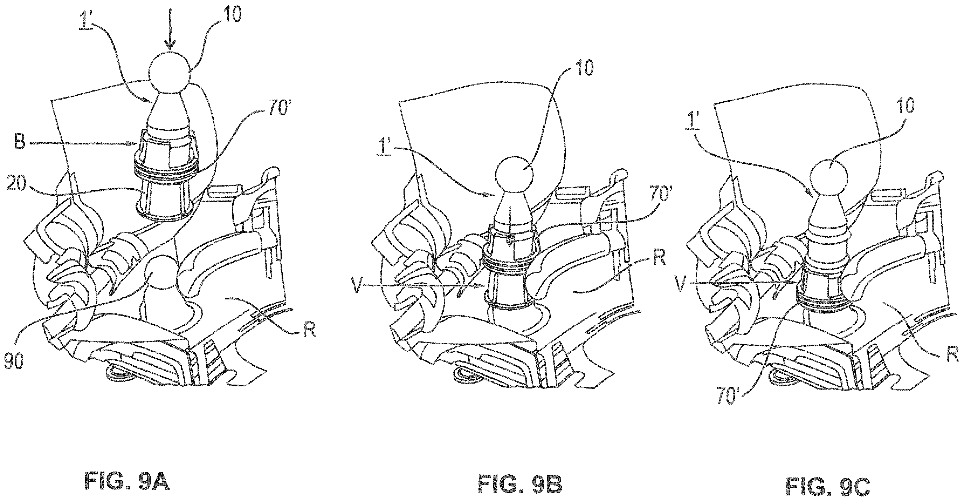

An einer radialen Außenseite 26 der Wandelemente 24 ist eine Verriegelungsposition V definiert. Sie dient der Anordnung eines Verriegelungselements 70, welches bevorzugt in der Ausführungsform gemäß den Figuren 4 bis 7 als Federklammer 70 vorgesehen ist. Das Verriegelungselement 70 hat die Funktion, eine radiale Auswärtsbewegung der Wandelemente 24 einzuschränken oder zu verhindern. Dadurch wird der Aufnahmeraum 22 gegen das Lösen eines darin befindlichen männlichen Kupplungselements 90 verriegelt. Anhand der Figuren 9 bis 13 ist erkennbar, dass unterschiedliche Ausgestaltungen des Verriegelungselements 70 bevorzugt sind. Die Wahl des Verriegelungselements 70 kann mit der Stärke der gewünschten Verriegelung, der Zugänglichkeit des Verlängerungsadapters 1 beim Installieren und beim Herstellen der Verbindung zwischen den zwei Bauteilen und durch den zur Verfügung stehenden Bauraum variieren.

Der in den Figuren 3 bis 7 dargestellte Verlängerungsadapter 1 nutzt die Federklammer 70 als Verriegelungselement, die das weibliche Kupplungsende 20 und somit die Mehrzahl an Wandelementen 24 umfänglich umgibt. Die Federklammer 70 ist derart konfiguriert, dass sie einen Körper mit rundem Querschnitt umgreift und federnd einspannt. Die Federklammer 70 weist bevorzugt mindestens zwei Radialstege 72 auf, die in Umfangsrichtung der Federklammer 70 relativ zueinander versetzbar sind. Werden die Radialstege 72 mithilfe eines Werkzeugs oder manuell durch die Kraft eines Werkers aufeinander zu bewegt, vergrößert sich die innere umfängliche Ausdehnung der Federklammer 70. Dadurch wird die Federklammer 70 bevorzugt aus einer Basisposition B zwischen dem männlichen 10 und dem weiblichen Kupplungsende 20 gelöst, umfänglich aufgeweitet und kann in Längsrichtung L des Verlängerungsadapters 1, also axial, versetzt werden. In gleicher Weise erfolgt ein Lösen aus der Verriegelungsposition V, um die Federklammer 70 von der Mehrzahl von Wandelementen 24 zu lösen und zu entfernen und das männliche Kupplungselement 90 aus dem weiblichen Kupplungsende 20 zu entfernen. Nachdem die Federklammer 70 aus der Basisposition B gelöst worden ist, wird sie in aufgeweitetem Zustand axial versetzt und radial angrenzend an die Wandelemente 24 angeordnet. Bevor die Federklammer 70 derart positioniert wird, wurde bereits das männliche Kupplungselement 90 im weiblichen Kupplungsende 20 angeordnet, vorzugsweise eingeschnappt. Nun werden die Radialstege 72 voneinander entfernt, so dass die Federklammer 70 aufgrund ihrer inhärenten Federspannung ihren Innendurchmesser verringert. Sobald die Federklammer 70 passend auf der radialen Außenseite 26 der Wandelemente 24 in der Verriegelungsposition V positioniert ist, werden die Radialstege 22 vollständig freigegeben. Die Federklammer 70 drückt aufgrund ihrer inhärenten Federkraft die Wandelemente 24 radial einwärts, bevorzugt gegen das männliche Kupplungselement 90, so dass dieses dadurch im Aufnahmeraum 22 gehalten wird.

Um die Anordnung der Federklammer 70 in der Verriegelungsposition V zu unterstützen, weist die radiale Außenseite 26 der Wandelemente 24 oder zumindest eine Auswahl an Wandelementen 24 mindestens einen, vorzugsweise zwei, Radialkragen 27 auf. Die Radialkrägen 27 begrenzen die Verriegelungsposition V in axialer Richtung und unterstützen dadurch ein schnelles und genaues Positionieren der Federklammer 70.

Gemäß einer bevorzugten Ausführungsform vorliegender Erfindung ist zwischen männlichem 10 und weiblichem Kupplungsende 20 das Zwischenstück 50 angeordnet. Es ist ebenfalls bevorzugt, das Zwischenstück 50 auf eine minimale Länge zu reduzieren oder ganz wegzulassen, so dass das männliche 10 und das weibliche Kupplungselement 20 direkt aneinander angrenzen.

Zudem ist es bevorzugt, das männliche 10 und das weibliche Kupplungsende 20 über eine verstellbare Gewindeverbindung axial zueinander anzuordnen. Dazu werden bevorzugt das männliche und das weibliche Kupplungsende 10, 20 an getrennten Axialstücken vorgesehen. Diese Axialstücke weisen zueinander komplementäre Gewindeabschnitte auf, um die Axialstücke miteinander zu verbinden. Gemäß einer anderen Ausführungsform sind die Axialstücke als Teleskopstange ausgebildet, so dass ihre Gesamtlänge als Steck-, Schraub- oder Steck-Schraub-Verbindung einstellbar ist. In Abhängigkeit davon, wie weit die Gewindeabschnitte aufeinander geschraubt werden, ist die Gesamtlänge der miteinander verbundenen Axialstücke frei einstellbar. Die gleiche Funktion ist auch über eine längenvariable Steckverbindung realisierbar.

Diese Gewinde- oder Steckverbindung gewährleistet eine freie Längeneinstellung des Verlängerungsadapters 1. Es versteht sich, dass die oben beschriebenen konstruktiven und funktionellen Eigenschaften und Verfahrensabläufe in Bezug auf den in den beschriebenen Figuren gezeigten Verlängerungsadapter 1 mit Federklammer 70 in gleicher Weise bzw. analog auch für die weiteren bevorzugten Ausführungsformen des Verlängerungsadapters 1 mit alternativen Verriegelungselementen gelten.

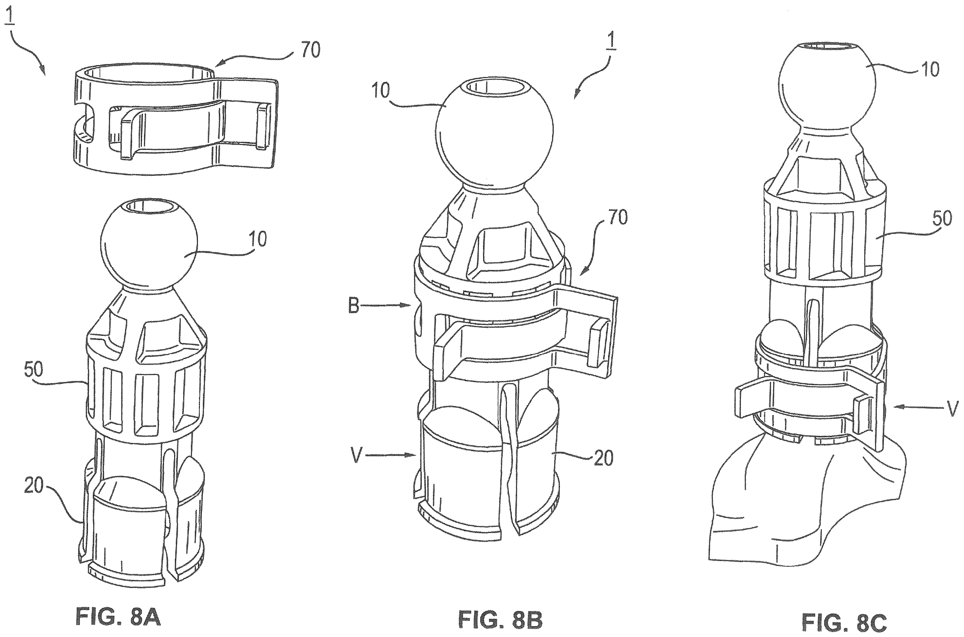

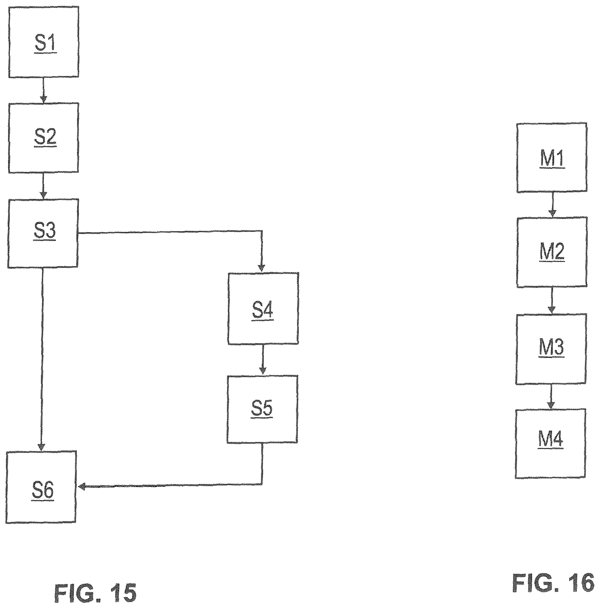

In Figur 8 (a) sind der bevorzugte Verlängerungsadapter 1 und die Federklammer 70 nebeneinander dargestellt. Zuvor wurde bevorzugt der Verlängerungsadapter 1 mithilfe eines Spritzgussverfahrens in einer komplementär zur Konstruktion des Verlängerungsadapters 1 ausgebildeten Form (S1) hergestellt (S2) und aus dieser entformt (S3). Nachfolgend wird die Federklammer 70 beispielgebend für das Verriegelungselement vorzugsweise in der Basisposition B angeordnet (S6). Sollte das Verriegelungselement gemäß einer anderen bevorzugten Ausführungsform aus Kunststoff bestehen, wird es zunächst mittels Spritzgießen hergestellt (S4) und entformt (S5), bevor es auf dem Verlängerungsadapter 1 angeordnet werden kann (S6) (siehe Fig. 15).

Gemäß einer Verfahrensalternative ist es bevorzugt, den Verlängerungsadapter 1 und das Verriegelungselement 70, sofern es aus Kunststoff besteht, in der ersten Spritzgussform mit dem darin enthaltenen Verlängerungsadapter 1 mit Hilfe eines 2K Spritzgussverfahrens (Zweikomponentenspritzgussverfahren) spritzzugießen. Bei dieser Verfahrensführung sind nach Abschluss der Herstellung der Verlängerungsadapter 1 und das Verriegelungselement 70 reibschlüssig und/oder mit Hilfe einer Mehrzahl von Abrissstegen am Verlängerungsadapter 1 befestigt ist. Unter dem Begriff Zweikomponentenspritzgießen werden diejenigen Verfahren zusammengefasst, bei denen zwei verschiedene Kunststofftypen oder Kunststoffmodifikationen über Spritzgießen in einem Prozess miteinander verbunden werden. Mit unterschiedlicher Kunststoffmodifikation ist dabei derselbe Kunststofftyp, allerdings mit abweichenden Füllstoffen, wie beispielsweise Farbstoffe (Mehrfarbenspritzgießen), Verstärkungs- oder Fasermaterial bekannter Kunststoffe, wie bspw. Glasfasern, unterschiedlich große Anteile an Verstärkungsmaterial oder unterschiedliche oder unterschiedliche Anteile von Weichmachern, gemeint. Diese Art von Urformung birgt ein großes Potential bezüglich Kostenoptimierung und Rationalisierung in sich, denn komplexe Teile mit mehreren Funktionsanforderungen (z.B. mehrere Farben, hart/weich usw.) lassen sich in einem Arbeitsschritt und ohne größere Nacharbeit herstellen. Bei diesem Verfahren werden zwei unterschiedliche Kunststoffe in Form von zwei Kunststoffschüssen zeitlich versetzt in eine Spritzgussform eingespritzt, um ein aus zwei Komponenten bestehendes Teil herzustellen. Es ist ebenfalls möglich, den gleichen Kunststoff zeitlich versetzt in zwei oder mehreren Schüssen in die Spritzgussform einzubringen. Die durch den jeweiligen Schuss erzeugten Komponenten werden in aneinander angrenzender Anordnung in der Spritzgussform gebildet, ohne ineinander zu fließen. Dabei ist es ebenfalls bevorzugt, dass zueinander abgegrenzte Hohlräume der Spritzgussform gleichzeitig oder zeitlich versetzt mit dem gleichen oder unterschiedlichen Kunststoffen gefüllt werden, um die oben genannten Komponenten zu bilden. Dabei sind vorzugsweise die mehreren Komponenten, hier der Verlängerungsadapter 1 und das Verriegelungselement 70, über eine Mehrzahl von Abrissstegen miteinander verbunden. Abrissstege bezeichnen stegartige Brücken zwischen den Kunststoffteilen 1, 70, die aufgrund ihres geringen Durchmessers ohne maschinellen Aufwand durchtrennbar sind.

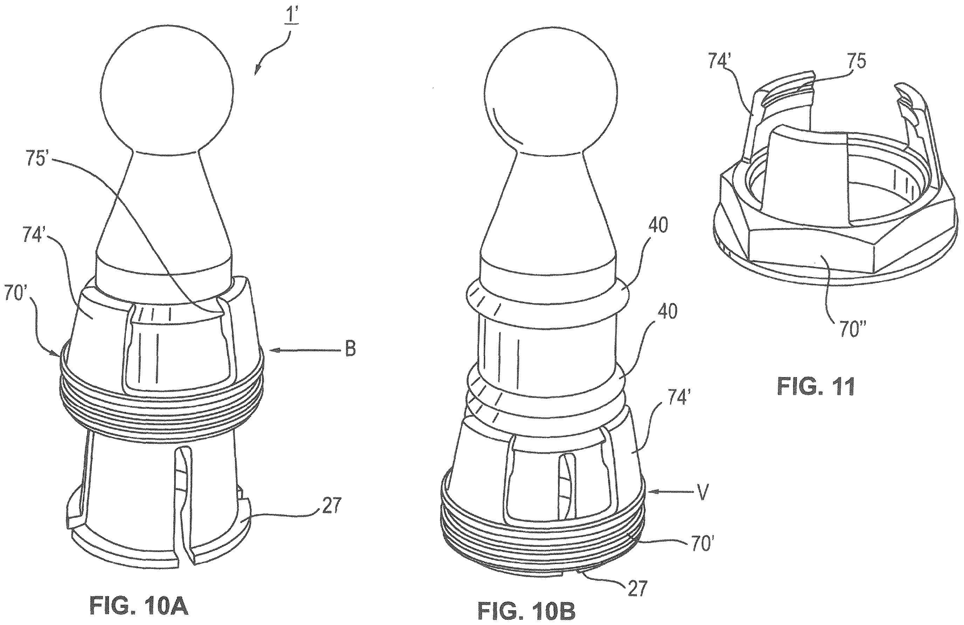

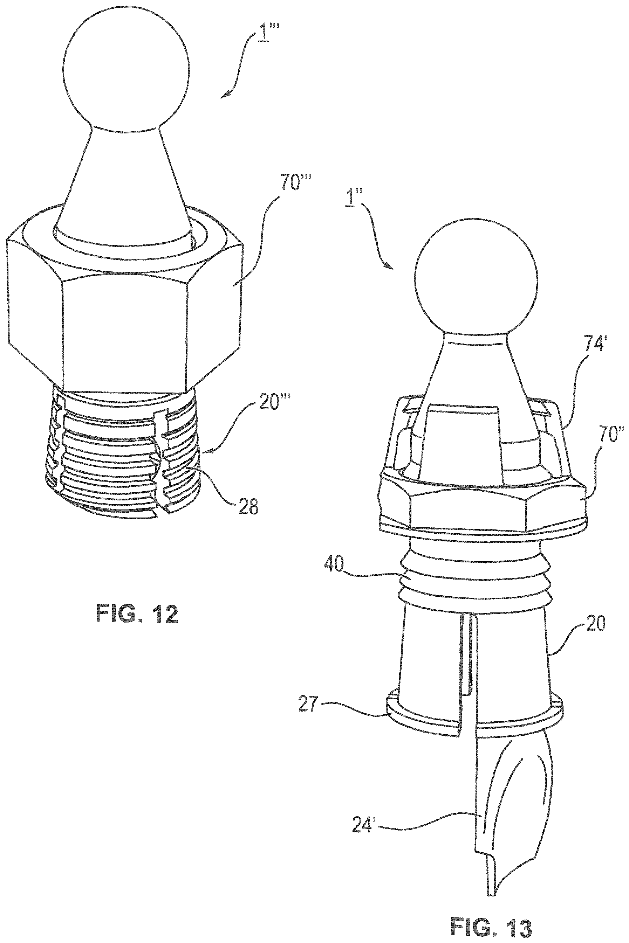

Nachdem der Verlängerungsadapter hergestellt worden ist, wird vorzugsweise das männliche Kupplungselement 90 im weiblichen Kupplungsende 20 angeordnet. Danach wird das männliche Kupplungselement 90 darin verriegelt, in dem das Verriegelungselement 70 auf dem weiblichen Kupplungsende 20, bevorzugt auf den Wandelementen 24, angeordnet wird. Dies ist beispielgebend in Figur 8 (c) gezeigt. Der gleiche Vorgang ist anhand einer weiteren bevorzugten Ausführungsform des Verlängerungsadapters 1' in Figur 9 gezeigt. Zunächst wird der Verlängerungsadapter 1' benachbart zum männlichen Kupplungselement 90 angeordnet und dann auf das männliche Kupplungselement 90 aufgesteckt. In Figur 9 besteht das männliche Kupplungselement 90 bevorzugt aus einem Bolzen mit Kugelkopf. Der Kugelkopf schnappt in die Kugelpfanne des weiblichen Kupplungsendes 20 ein, um den Freiraum F zu überbrücken. Nachfolgend wird das Verriegelungselement 70' in Form eines Ringelements an der radialen Außenseite 26 der Wandelemente 24 angeordnet, um den Kugelkopf in seiner Position zu verriegeln (siehe Fig. 9 (c), M3). Abschließend wird das männliche Kupplungsende 10 in das weibliche Kupplungselement 80 eingerastet, um die Verbindung zwischen den beiden Bauteilen herzustellen (M4). Bevor das Verriegelungselement bevorzugt in Form der Federklammer 70 versetzt werden kann, wird sie zunächst aufgeweitet, wie es oben beschrieben ist (M2). Es ist in gleicher Weise bevorzugt, ein mutterähnliches Verriegelungselement 70' auf das weibliche Kupplungsende 20 aufzuschrauben (Fig. 12) oder ein ringartiges Verriegelungselement 70" auf das weibliche Kupplungsende 20 aufzustecken (siehe unten M3, Fig. 10a, b). Es versteht sich, dass die Schritte M1 und M4 bei der Montage gegeneinander vertauscht werden können.

Eine weitere bevorzugte Ausführungsform des Verlängerungsadapters 1' ist in Figur 10 gezeigt. Hier ist das Verriegelungselement 70' in Form eines Ringelements ausgestaltet. Das Ringelement 70' ist axial auf dem Verlängerungsadapter 1' versetzbar. Um das Ringelement 70' in der Basisposition B und der Verriegelungsposition V lösbar zu fixieren, weist das Ringelement 70' mindestens einen sich axial erstreckenden Verrastungssteg 74' auf. Der mindestens eine Verrastungssteg 74', vorzugsweise 2 bis 5, ist an einer axialen Stirnseite des Ringelements 70' angeformt und erstreckt sich bevorzugt in Richtung des männlichen Kupplungsendes 10. Die Verrastungsstege 74', hier bevorzugt 3, sind radial einwärts geneigt, um bevorzugt mit einer gewissen Federspannung am Verlängerungsadapter 1' anzuliegen. Zudem ist vorzugsweise an einer radialen Innenseite der Verrastungsstege 74' mindestens eine Rastnut 75' vorgesehen. Die Rastnut 75' wirkt mit umfänglich angeordneten Raststegen 40 zusammen, die durch die Federkraft der Verrastungsstege 74' in die Rastnut 75' gedrückt werden. Vorzugsweise sind mehrere Raststege 40 positioniert, um einerseits das Verriegelungselement 70' in der Basisposition B und andererseits in der Verriegelungsposition V zu halten. Es versteht sich, dass die Anordnung der Raststege 40 und der Rastnut 75' auch gegeneinander vertauscht sein kann.

Ein Innendurchmesser des Ringelements 70' ist derart gewählt, dass das Ringelement 70' auf das weibliche Kupplungsende 20 aufgeschoben werden kann, um das darin angeordnete männliche Kupplungselement 90 zu verriegeln. Vorzugsweise wird dazu das Ringelement 70' manuell axial versetzt. Der oben beschriebene Radialkragen 27 stellt bevorzugt dabei eine Anlagefläche für das Ringelement 70' bereit, wie in den Figuren 10a und b zu erkennen ist.

Eine weitere bevorzugte Ausführungsform des Ringelements 70'" bzw. des Verriegelungselements 70" ist in Figur 11 dargestellt. Im Unterschied zum Ringelement 70" der Figur 10 ist das Ringelement 70" als Mehrkantkonstruktion ausgebildet, während die übrigen Konstruktionsmerkmale gleich sind zum Ringelement 70". Die Mehrkantkonstruktion ermöglicht, das Ringelement 70" mithilfe einer Nuss auf dem weiblichen Kupplungsende 20 zu installieren. Der Verlängerungsadapter 1" mit Mehrkant-Ringelement 70" ist in einer bevorzugten Ausgestaltung in Figur 13 gezeigt. Zusätzlich zum Verriegelungselement 70" ist hier noch ein axial verlängertes Wandelement 34' vorgesehen. Sobald das weibliche Kupplungsende 20 auf das männliche Kupplungselement 90 aufgesteckt worden ist, wird das verlängerte Wandelement 24' am zweiten Bauteil durch geeignete Anlage gegen radiale Auslenkung blockiert. Dies unterstützt ebenfalls ein Verriegeln des männlichen Kupplungselements 90 im weiblichen Kupplungsende 20.

Figur 12 zeigt einen bevorzugten Verlängerungsadapter 1‴, dessen Verriegelungselement 70‴ durch ein mutterähnliches Element 70‴ oder allgemein durch ein Gewindeelement gebildet wird. Das mutterähnliche Element 70‴ weist ein Innengewinde auf, das passend zu einem Außengewinde 28 an der radialen Außenseite 26 der Wandelemente 24 des weiblichen Kupplungsendes 20 ausgebildet ist. Um das männliche Kupplungselement 90 im weiblichen Kupplungsende 20‴ zu verriegeln, wird das mutterähnliche Verriegelungselement 70‴ auf das weibliche Kupplungsende 20‴ aufgeschraubt. Vorzugsweise verhindert der Radialkragen 27, dass das mutterähnliche Verriegelungselement 70‴ über das weibliche Kupplungsende 20 hinaus vom Verlängerungsadapter 1‴ geschraubt wird.

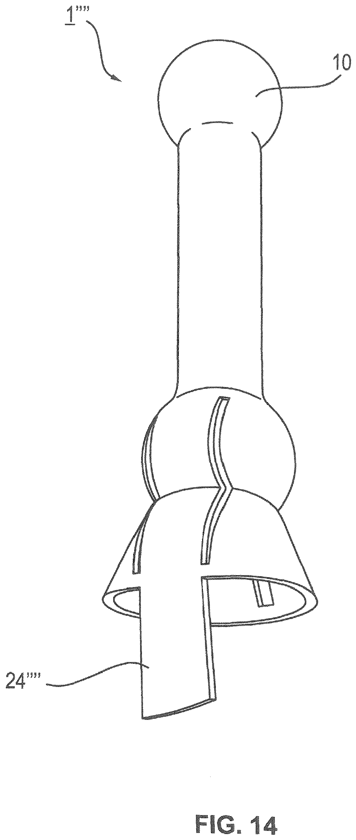

Eine weitere bevorzugte Ausführungsform des Verlängerungsadapters 1ʺʺ ist in Figur 14 gezeigt. Dieser Verlängerungsadapter 1ʺʺ weist ein Verriegelungselement in Form eines axial verlängerten Wandelements 24ʺʺ auf. Ähnlich wie in der Ausführungsform der Figur 13 verriegelt das verlängerte Wandelement 24"" das weibliche Kupplungselement 20"" durch Anlage am zweiten Bauteil. Zudem besteht das weibliche Kupplungsende 20ʺʺ bevorzugt nur aus zwei Wandelementen, von denen lediglich das verlängerte Wandelement 24ʺʺ radial auswärts federnd bewegbar ist. Mithilfe dieser Konstruktion wird ein Einsetzen und Verriegeln des männlichen Kupplungselements 90 im weiblichen Kupplungsende 20ʺʺ gewährleistet.

### Bezugszeichenliste

- A: Abdeckung
- B: Basisposition
- L: Längsachse
- R: Rahmenstruktur
- V: Verriegelungsposition
- 10: männliches Kupplungsende
- 12: Kugelkopf
- 20: weibliches Kupplungsende
- 22: Aufnahmeraum
- 24: Wandelement
- 25: radiale Innenseite
- 26: radiale Außenseite
- 27: Radialkragen
- 40: Raststeg
- 50: Zwischenstück
- 70: Verriegelungselement, Federklammer
- 70': Ringelement
- 70‴: Mehrkant-Ringelement
- 72: Radialsteg
- 74': Verrastungssteg
- 75': Rastnut
- 80: weibliches Kupplungselement
- 90: männliches Kupplungselement

## Patentansprüche

1. Verlängerungsadapter einer Steckkupplung, mit dem ein Freiraum zwischen einem an einem ersten Bauteil angeordneten männlichen Kupplungselement (90) und mindestens einem an einem zweiten Bauteil angeordneten weiblichen Kupplungselement (80) verbindend überbrückbar ist, und der die folgenden Merkmale aufweist:
a. mindestens ein männliches Kupplungsende (10), das in das mindestens eine weibliche Kupplungselement (80) einsteckbar ist,
b. ein weibliches Kupplungsende (20), in dem das männliche Kupplungselement (90) aufnehmbar ist und das mit dem mindestens einen männlichen Kupplungsende (10) über ein Zwischenstück (50) verbunden ist, und
c. ein in axialer Richtung des Verlängerungsadapters versetzbar angeordnetes Verriegelungselement (70), mit dem in einer Verriegelungsposition (V) zumindest teilweise umgebend das weibliche Kupplungsende (20) ein Lösen eines männlichen Kupplungselements (90) aus dem weiblichen Kupplungsende (20) verhindert ist.

2. Verlängerungsadapter gemäß Anspruch 1, dessen mindestens ein männliches Kupplungsende (10) eine Verdickung, insbesondere einen Kugelkopf (12), umfasst.

3. Verlängerungsadapter gemäß Anspruch 1 oder 2, dessen weibliches Kupplungsende (20) einen Aufnahmeraum (22) umfasst, der durch eine Mehrzahl von Wandelementen (24) definiert ist, die den Aufnahmeraum (22) zueinander beabstandet umgeben, oder der durch eine durchgehende elastische Wand definiert ist.

4. Verlängerungsadapter gemäß Anspruch 3, in dem das Verriegelungselement (70) in der Verriegelungsposition (V) die Mehrzahl von Wandelementen (24) derart umgibt, dass diese ein im Aufnahmeraum (22) aufgenommenes männliches Kupplungselement (90) unlösbar festhalten.

5. Verlängerungsadapter gemäß einem der vorhergehenden Ansprüche, in dem das zumindest teilweise umgebende Verriegelungselement (70) eine ringförmige oder eine U-förmige Federklammer ist.

6. Verlängerungsadapter gemäß einem der Ansprüche 1 bis 4, in dem das Verriegelungselement (70) ein Mutterelement ist, das auf ein Gewinde an einer radialen Außenseite (26) des weiblichen Kupplungsendes (20) aufschraubbar ist.

7. Verlängerungsadapter gemäß einem der Ansprüche 1 bis 4, in dem das Verriegelungselement (70) ein Ringelement (70') ist, das auf einer radialen Außenseite (26) des weiblichen Kupplungsendes (20) aufsteckbar ist.

8. Verlängerungsadapter gemäß Anspruch 7, dessen Ringelement (70') eine Mehrkantkontur aufweist.

9. Verlängerungsadapter gemäß Anspruch 7 oder 8, in dem das Verriegelungselement (70) zumindest einen Raststeg umfasst, der das Verriegelungselement (70) in einer Basisposition (B) und/oder der Verriegelungsposition (V) fixiert.

10. Verlängerungsadapter gemäß einem der vorhergehenden Ansprüche 1 bis 8, der eine Basisposition (B) des Verriegelungselements (70) zwischen männlichem (90) und weiblichem Kupplungselement (80) und die Verriegelungsposition (V) aufweist, wobei das Verriegelungselement (70) vorzugsweise zumindest in der Basisposition (B) verrastbar ist.

11. Verlängerungsadapter gemäß einem der vorhergehenden Ansprüche, der ein erstes und ein zweites männliches Kupplungsende (10) umfasst, so dass der Verlängerungsadapter Y-förmig ausgebildet ist.

12. Herstellungsverfahren für einen Verlängerungsadapter, insbesondere ein Verlängerungsadapter gemäß einem der Ansprüche 1 bis 11, mit den folgenden Schritten:
a. Bereitstellen einer ersten Spritzgussform, die komplementär zu dem Verlängerungsadapter ausgebildet ist, der ein männliches Kupplungsende (10), das in ein weibliches Kupplungselement (80) einsteckbar ist, ein weibliches Kupplungsende (20), in dem ein männliches Kupplungselement (90) aufnehmbar ist und welches mit dem männlichen Kupplungsende (10) über ein Zwischenstück (50) verbunden ist, aufweist (S1),
b. Spritzgießen (S2) und Entformen (S3) des Verlängerungsadapters und
c. Anordnen eines in axialer Richtung des Verlängerungsadapters versetzbaren Verriegelungselements (70) auf dem Verriegelungsadapter (S6).

13. Herstellungsverfahren gemäß Anspruch 12, mit dem weiteren Schritt:
d. Spritzgießen (S4) in einer zweiten Spritzgussform und Entformen (S5) des Verriegelungselements (70) aus Kunststoff aus der zweiten Spritzgussform und danach Anordnen auf dem Verlängerungsadapter.

14. Herstellungsverfahren gemäß Anspruch 12 mit dem weiteren Schritt:
Spritzgießen des Verriegelungselements (70) in der ersten Spritzgussform mit dem darin enthaltenen Verlängerungsadapter mit Hilfe eines 2K-Spritzgussverfahrens, so dass das Verriegelungselement (70) reibschlüssig und/oder mit Hilfe von zumindest einem Abrisssteg am Verlängerungsadapter lösbar befestigt ist.

15. Montageverfahren eines Verlängerungsadapters, mit dem ein Freiraum zwischen einem männlichen Kupplungselement (90) und mindestens einem weiblichen Kupplungselement (80) überbrückt wird und der mindestens ein männliches Kupplungsende (10), das in das mindestens eine weibliche Kupplungselement (80) einsteckbar ist, und ein weibliches Kupplungsende (20), in dem das männliche Kupplungselement (90) aufnehmbar ist und das mit dem mindestens einen männlichen Kupplungsende (10) über ein Zwischenstück (50) verbunden ist, sowie ein in axialer Richtung des Verlängerungsadapters versetzbar angeordnetes Verriegelungselement (70) aufweist, wobei das Montageverfahren die folgenden Schritte umfasst:
a. Einstecken des mindestens einen männlichen Kupplungsendes (10) in das mindestens eine weibliche Kupplungselement (80) (M4),
b. Einstecken des männlichen Kupplungselements (90) in das weibliche Kupplungsende (20) des Verlängerungsadapters (M1) und
c. Versetzen des Verriegelungselements (70) in eine Verriegelungsposition (V), in der das Verriegelungselement (70) das weibliche Kupplungsende (20) zumindest teilweise umgibt, so dass ein Lösen des männlichen Kupplungselements (90) aus dem weiblichen Kupplungsende (20) verhindert ist (M3).

16. Montageverfahren gemäß Anspruch 15 mit dem weiteren Schritt:
d. Aufweiten einer ringförmigen Federklammer als Verriegelungselement (70), so dass die Federklammer auf das weibliche Kupplungsende (20) aufsteckbar ist (M2).

17. Montageverfahren gemäß Anspruch 15 mit dem weiteren Schritt:
e. Aufschrauben eines mutterähnlichen Verriegelungselements (70) auf das weibliche Kupplungsende (20) (M3).

18. Montageverfahren gemäß Anspruch 15 mit dem weiteren Schritt:
f. Aufstecken eines ringartigen Verriegelungselements (70) auf das weibliche Kupplungsende (20) (M3).

19. Montageverfahren gemäß einem der Ansprüche 15 bis 18 mit dem weiteren Schritt:
Einstecken eines zweiten männlichen Kupplungsendes (10) in ein zweites weibliches Kupplungselement (80), wobei der Verlängerungsadapter Y-förmig ausgebildet ist.

20. Verbindung zwischen zwei Bauteilen mit einem Verlängerungsadapter gemäß einem der vorhergehenden Patentansprüche 1 bis 11, in der ein erstes Bauteil mit einem männlichen Kupplungselement (90) und ein zweites Bauteil mit mindestens einem weiblichen Kupplungselement (80) ausgestattet sind, so dass der Verlängerungsadapter einen Freiraum zwischen dem ersten und dem zweiten Bauteil durch eine Verbindung mit dem männlichen Kupplungselement (90) und dem mindestens einen weiblichen Kupplungselement (80) überbrückt.

## Claims

1. Extension adapter of a plug-in coupling, with which a free space between a male coupling element (90) arranged on a first component and at least one female coupling element (80) arranged on a second component is bridgeable in a connecting manner, and which has the following features:
a. at least one male coupling end (10) which is pluggable into the at least one female coupling element (80),
b. a female coupling end (20) in which the male coupling element (90) is receivable and which is connected to the at least one male coupling end (10) via an intermediate piece (50), and
c. a locking element (70) which is displaceably arranged in axial direction of the extension adapter with which, in a locking position (V) at least partially surrounding the female coupling end (20), a releasing of a male coupling element (90) from the female coupling end (20) is prevented.

2. Extension adapter according to claim 1, the at least one male coupling end (10) of which comprises a thickening, in particular a ball head (12).

3. Extension adapter according to claim 1 or 2, the female coupling end (20) of which comprises a receiving space (22), which is defined by a plurality of wall elements (24) surrounding the receiving space (22) in a manner in which they are spaced apart from each other, or which is defined by a continuous elastic wall.

4. Extension adapter according to claim 3, in which the locking element (70) in the locking position (V) surrounds the plurality of wall elements (24) such that they retain a male coupling element (90) in a non-releasable manner that is received in the receiving space (22).

5. Extension adapter according to one of the preceding claims, in which the at least partially surrounding locking element (70) is a ring-shaped or a U-shaped spring clip.

6. Extension adapter according to one of the claims 1 to 4, in which the locking element (70) is a nut element that is screwable onto a thread on a radial outer side (26) of the female coupling end (20).

7. Extension adapter according to one of the claims 1 to 4, in which the locking element (70) is a ring element (70') that is pluggable on a radial outer side (26) of the female coupling end (20).

8. Extension adapter according to claim 7, the ring element (70') of which comprises a polygonal contour.

9. Extension adapter according to claim 7 or 8, in which the locking element (70) comprises at least a latching web, which fixes the locking element (70) in a base position (B) and/or the locking position (V).

10. Extension adapter according to one of the preceding claims 1 to 8, which comprises a base position (B) of the locking element (70) between male (90) and female coupling element (80) and the locking position (V), wherein the locking element (70) is latchable preferably at least in the base position (B).

11. Extension adapter according to one of the preceding claims, which comprises a first and a second male coupling end (10) so that the extension adapter is formed Y-shaped.

12. Production method for an extension adapter, in particular an extension adapter according to one of the claims 1 to 11, comprising the following steps:
a. providing a first injection mold, which is formed complementary to the extension adapter, which comprises a male coupling end (10) that is pluggable into a female coupling element (80), a female coupling end (20) in which a male coupling element (90) is receivable and which is connected with the male coupling end (10) via an intermediate piece (50) (S1),
b. injection molding (S2) and demolding (S3) of the extension adapter, and
c. arranging a locking element (70) that is displaceable in the axial direction of the extension adapter on the locking adapter (S6).

13. Production method according to claim 12, with the further step:
d. injection molding (S4) in a second injection mold and demolding (S5) the plastic locking element (70) from the second injection mold and thereafter arranging it on the extension adapter.

14. Production method according to claim 12, with the further step:
injection molding of the locking element (70) in the first injection mold with the extension adapter contained therein by means of a two-component injection molding method, so that the locking element (70) is frictionally and/or releasably attached to the extension adapter by means of at least one tear-off web.

15. Installation method of an extension adapter, with which a free space between a male coupling element (90) and at least one female coupling element (80) is bridged and which comprises at least one male coupling end (10) which is pluggable into the at least one female coupling element (80), and a female coupling end (20) in which the male coupling element (90) is receivable and which is connected to the at least one male coupling end (10) via an intermediate piece (50), as well as a locking element (70) that is displaceably arranged in axial direction of the extension adapter, wherein the installation method comprises the following steps:
a. plugging the at least one male coupling end (10) into the at least one female coupling element (80) (M4),
b. plugging the male coupling element (90) into the female coupling end (20) of the extension adapter (M1), and
c. displacing the locking element (70) into a locking position (V), in which the locking element (70) surrounds the female coupling end (20) at least partially, so that a releasing of the male coupling element (90) from the female coupling end (20) is prevented (M3).

16. Installation method according to claim 15, with the further step:
d. extending a ring-shaped spring clip as a locking element (70), so that the spring clip is pluggable onto the female coupling end (20) (M2).

17. Installation method according to claim 15, with the further step:
e. screwing a nut-like locking element (70) onto the female coupling end (20) (M3).

18. Installation method according to claim 15, with the further step:
f. plugging a ring-shaped locking element (70) onto the female coupling end (20) (M3).

19. Installation method according to one of the claims 15 to 18, with the further step:
plugging a second male coupling end (10) into a second female coupling element (80), whereby the extension adapter is formed in a Y-shape.

20. Connection between two components with an extension adapter according to one of the preceding claims 1 to 11, in which a first component is provided with a male coupling element (90) and a second component is provided with at least one female coupling element (80), so that the extension adapter bridges a free space between the first and the second component by means of a connection with the male coupling element (90) and the at least one female coupling element (80).

## Revendications

1. Adaptateur prolongateur d'un accouplement à emboîtement, avec lequel un espace libre entre un élément d'accouplement mâle (90) disposé sur un premier composant et au moins un élément d'accouplement femelle (80) disposé sur un deuxième composant peut être comblé de manière à créer une liaison, et comprenant les caractéristiques suivantes :
a. au moins une extrémité d'accouplement mâle (10) susceptible d'être emboîtée dans l'au moins un élément d'accouplement femelle (80),
b. une extrémité d'accouplement femelle (20) dans laquelle l'élément d'accouplement mâle (90) peut être reçu et laquelle est reliée à l'au moins une extrémité d'accouplement mâle (10) par le biais d'une pièce intermédiaire (50), et
c. un élément de verrouillage (70) disposé de manière à pouvoir être déplacé dans la direction axiale de l'adaptateur prolongateur, lequel permet d'empêcher le détachement d'un élément d'accouplement mâle (90) par rapport à l'extrémité d'accouplement femelle (20) dans une position de verrouillage (V) entourant au moins partiellement l'extrémité d'accouplement femelle (20).

2. Adaptateur prolongateur selon la revendication 1, dont au moins une extrémité d'accouplement mâle (10) comporte une surépaisseur, en particulier une tête sphérique (12).

3. Adaptateur prolongateur selon la revendication 1 ou 2, dont l'extrémité d'accouplement femelle (20) comporte un espace de réception (22) défini par une pluralité d'éléments de paroi (24) entourant l'espace de réception (22) de façon espacée les uns par rapport aux autres, ou défini par une paroi élastique continue.

4. Adaptateur prolongateur selon la revendication 3, dans lequel l'élément de verrouillage (70) entoure la pluralité d'éléments de paroi (24) de telle façon dans la position de verrouillage (V), que ceux-ci maintiennent de façon non détachable un élément d'accouplement mâle (90) reçu dans l'espace de réception (22).

5. Adaptateur prolongateur selon l'une des revendications précédentes, dans lequel l'élément de verrouillage (70) au moins partiellement entourant est une pince à ressort annulaire ou en forme de U.

6. Adaptateur prolongateur selon l'une des revendications 1 à 4, dans lequel l'élément de verrouillage (70) est un élément d'écrou susceptible d'être vissé sur un filetage sur un côté extérieur radial (26) de l'extrémité d'accouplement femelle (20).

7. Adaptateur prolongateur selon l'une des revendications 1 à 4, dans lequel l'élément de verrouillage (70) est un élément annulaire (70') susceptible d'être emboîté sur un côté extérieur radial (26) de l'extrémité d'accouplement femelle (20).

8. Adaptateur prolongateur selon la revendication 7, dont l'élément annulaire (70') présente un contour polygonal.

9. Adaptateur prolongateur selon la revendication 7 ou 8, dans lequel l'élément de verrouillage (70) comporte au moins une nervure d'encliquetage fixant l'élément de verrouillage (70) dans une position de base (B) et/ou dans la position de verrouillage (V).

10. Adaptateur prolongateur selon l'une des revendications précédentes 1 à 8, lequel présente une position de base (B) de l'élément de verrouillage (70) entre l'élément d'accouplement mâle (90) et l'élément d'accouplement femelle (80) ainsi que la position de verrouillage (V), dans lequel l'élément de verrouillage (70) peut être encliqueté de préférence au moins dans la position de base (B).

11. Adaptateur prolongateur selon l'une des revendications précédentes, comportant une première et une deuxième extrémité d'accouplement mâle (10), de sorte que l'adaptateur prolongateur est conçu en forme de Y.

12. Procédé de fabrication pour un adaptateur prolongateur, en particulier un adaptateur prolongateur selon l'une des revendications 1 à 11, comprenant les étapes suivantes :
a. mise à disposition d'un premier moule d'injection conçu de manière complémentaire à l'adaptateur prolongateur, lequel présente (S1) une extrémité d'accouplement mâle (10) susceptible d'être emboîtée dans un élément d'accouplement femelle (80), une extrémité d'accouplement femelle (20) dans laquelle un élément d'accouplement mâle (90) peut être reçu et laquelle est reliée à l'extrémité d'accouplement mâle (10) par le biais d'une pièce intermédiaire (50),
b. moulage par injection (S2) et démoulage (S3) de l'adaptateur prolongateur et
c. disposition d'un élément de verrouillage (70) déplaçable dans la direction axiale de l'adaptateur prolongateur sur l'adaptateur de verrouillage (S6).

13. Procédé de fabrication selon la revendication 12, comprenant l'étape supplémentaire suivante :
d. moulage par injection (S4) dans un deuxième moule d'injection et démoulage (S5) de l'élément de verrouillage (70) en plastique hors du deuxième moule d'injection, puis disposition sur l'adaptateur prolongateur.

14. Procédé de fabrication selon la revendication 12, comprenant l'étape supplémentaire suivante :
moulage par injection de l'élément de verrouillage (70) dans le premier moule d'injection avec l'adaptateur prolongateur contenu dans celui-ci à l'aide d'un procédé de moulage par injection 2K, de sorte que l'élément de verrouillage (70) est fixé de façon détachable sur l'adaptateur prolongateur par friction et/ou à l'aide d'au moins une nervure d'arrachement.

15. Procédé de montage d'un adaptateur prolongateur, avec lequel un espace libre entre un élément d'accouplement mâle (90) et au moins un élément d'accouplement femelle (80) est comblé et lequel présente au moins une extrémité d'accouplement mâle (10) susceptible d'être emboîtée dans l'au moins un élément d'accouplement femelle (80), ainsi qu'une extrémité d'accouplement femelle (20) dans laquelle l'élément d'accouplement mâle (90) peut être reçu et laquelle est reliée à l'au moins une extrémité d'accouplement mâle (10) par le biais d'une pièce intermédiaire (50), ainsi qu'un élément de verrouillage (70) disposé de façon déplaçable dans la direction axiale de l'adaptateur prolongateur, le procédé de montage comportant les étapes suivantes :
a. emboîtement de l'au moins une extrémité d'accouplement mâle (10) dans l'au moins un élément d'accouplement femelle (80) (M4),
b. emboîtement de l'élément d'accouplement mâle (90) dans l'extrémité d'accouplement femelle (20) de l'adaptateur prolongateur (M1) et
c. déplacement de l'élément de verrouillage (70) dans une position de verrouillage (V), dans laquelle l'élément de verrouillage (70) entoure au moins partiellement l'extrémité d'accouplement femelle (20), de manière à empêcher le détachement de l'élément d'accouplement mâle (90) par rapport à l'extrémité d'accouplement femelle (20) (M3).

16. Procédé de montage selon la revendication 15, comprenant l'étape supplémentaire suivante :
d. élargissement d'une pince à ressort annulaire en tant qu'élément de verrouillage (70), de telle façon que la pince à ressort peut être emboîtée sur l'extrémité d'accouplement femelle (20) (M2).

17. Procédé de montage selon la revendication 15, comprenant l'étape supplémentaire suivante :
e. vissage d'un élément de verrouillage (70) du genre écrou sur l'extrémité d'accouplement femelle (20) (M3).

18. Procédé de montage selon la revendication 15, comprenant l'étape supplémentaire suivante :
f. emboîtement d'un élément de verrouillage (70) du genre anneau sur l'extrémité d'accouplement femelle (20) (M3).

19. Procédé de montage selon l'une des revendications 15 à 18, comprenant l'étape supplémentaire suivante :
insertion d'une deuxième extrémité d'accouplement mâle (10) dans un deuxième élément d'accouplement femelle (80), l'adaptateur prolongateur étant conçu en forme de Y.

20. Liaison entre deux composants à l'aide d'un adaptateur prolongateur selon l'une des revendications précédentes 1 à 11, dans laquelle un premier composant est équipé d'un élément d'accouplement mâle (90) et un deuxième composant est équipé d'au moins un élément d'accouplement femelle (80), de telle façon que l'adaptateur prolongateur comble un espace libre entre le premier et le deuxième composant par une liaison avec l'élément d'accouplement mâle (90) et l'au moins un élément d'accouplement femelle (80).
